# EUROPEAN PATENT SPECIFICATION

(11) **EP 2 638 199 B1**
(45) Date of publication and mention of the grant of the patent: **07.09.2016**
(21) Application number: 11778904.0
(22) Date of filing: 04.11.2011
(51) Int. Cl.: D06F 39/12, F16B 5/06

(54) **A WASHER/DRYER COMPRISING A CONNECTION MEMBER**
WASCHMASCHINE/TROCKNER MIT VERBINDUNGSELEMENT
MACHINE À LAVER/SÉCHER AVEC UN ÉLÉMENT DE RACCORDEMENT

(30) Priority: 12.11.2010 TR 201009484
(43) Date of publication of application: 18.09.2013
(73) Proprietor: Arçelik Anonim Sirketi, 34950 Istanbul (TR)
(72) Inventor: ALPUGAN, Semih, 34950 Istanbul (TR); CETINKAYA, Veysel Ertan, 34950 Istanbul (TR); GULBAY, Umit, 34950 Istanbul (TR); SEVLI, Atilla, 34950 Istanbul (TR)
(86) International application number: PCT/EP2011/069477
(87) International publication number: WO 2012/062673

(56) References cited:
- EP-A2- 1 046 825
- EP-A2- 1 806 447
- WO-A1-2005/113989
- GB-A- 2 143 577
- US-A1- 2005 146 254

## Description

The present invention relates to a washer/dryer wherein ease of assembly/disassembly is provided.

In washers/dryers, the outer cabinet is formed by fastening the rear, side and front walls to each other by means of connection members such as screws, etc. Forces coming from various directions due to the impacts and falls that can occur during transportation act on these screws and connection members. In case that the connection members and the areas whereat they are mounted cannot resist the forces, deformations and metal sheet tearings can occur in these areas. On the other hand, the assembly made by using screws is disadvantageous both in terms of time and labor. Furthermore, disassembly of the walls fixed with screws in order to reach the interior volume of the washer/dryer for maintenance takes time and the walls are also damaged during unscrewing and re-screwing.

On the other hand, screwing is performed from two points at the top and bottom due to structure of the front wall and the side walls. Therefore, it is difficult to position the side wall with respect to the front wall during assembly and gaps may be formed between the side wall and the front wall due to wrong positioning. The gaps formed at the front side of the washer/dryer visually disturb the user since they are formed in this region.

In the state of the art, various methods are used in order to prevent the damages that can occur at the connection points during transportation and for facilitating the assembly of the outer cabinet, as for example EP 1 806 447 A2.

In the state of the art German Patent No DE3722301, a telescopic connection structure and the assembly method that is performed by screwing through holes aligned with the front wall upper flange and on the body are explained.

In another state of the art embodiment, the United States Patent Application No US20040107738, an improvement made in the assembly of the front panel to the side panels in the washing machine is described. The fixing is performed by fitting the side flanges formed on the side panel to the notch recesses on the front panel. Since the number of recesses on the panel is high, the amount of load corresponding to each connection point is reduced.

In another state of the art embodiment, the United States Patent Application No US2004244439, an improvement made in the assembly of the front panel to the side panels in the washing machine is described.

The aim of the present invention is the realization of a washer/dryer wherein the damages that can occur during transportation are decreased and which can be easily assembled.

The washer/dryer realized in order to attain the aim of the present invention is explicated in the claims.

In the washer/dryer of the present invention, the connection member used in assembling the walls to each other, comprises a plate shaped body and at least one retainer that extends outwards from the body. The retainer is configured as a neck and a detent means of triangular cross-section, the portion on the neck and near the neck being wide, the open end being narrow. The retainer is disposed on a wall and is seated into an aligned housing on the other wall, providing the two walls to be secured to each other. This structure of the retainer provides it to easily enter into the housing and to be seated therein in place upon entering, with surface of the detent means bearing against the sides of the housing and preventing the retainer to dislodge from the housing.

At least one extension is located near the retainer, providing it to be guided into the housing. The extension provides the housing to be aligned with the connection member when the wall, whereon the connection member is located is moved towards the wall whereon the housing is situated in order to join the two walls. The extension and the retainer aligned with the housing pass to the other side of the wall through the housing. In this position, the retainer is seated snap-fittingly to the sides of the housing and provides the connection.

In an embodiment of the present invention, an extension is situated on each side of the retainer. Thus, the forces that may act on the retainer are minimized by preventing the sides of the housing from bearing against the retainer.

In an embodiment of the present invention, a gap is present between the extension and the retainer. Accordingly, transmission of force between the extension and the retainer is prevented.

In an embodiment of the present invention, a slot is formed on the retainer. While the retainer is placed into the housing, the slot provides the retainer to slightly close by stretching when bearing against the sides of the housing and to be easily placed into the housing.

In an embodiment of the present invention, the sides of the extensions are inclined. Thus, the ends of the extension and the retainer entering the housing first are narrower than the width of the housing. Thus, they enter the housing easily. The extensions widen as they move closer to the body due to their inclined surfaces and thus are provided to be seated in the housing. In this situation, the retainer remaining between the extensions bears against the sides of the housing by means of its detent means shape. Thus, the connection member and hence the wall whereon the connection member is mounted, becomes unable to move forwards/backwards, upwards/downwards and to the left and right with respect to the other wall with which it is desired to be joined.

In an embodiment of the present invention, the connection member is used in securing the side wall and the front wall to each other. In this embodiment, the housing is disposed on the front flange of the side wall. The connection member is mounted on the fold of the front wall side flange turning backwards and facing the front flange of the side wall. In other words, the housing and the connection member are disposed on the surfaces of the side wall and the front wall facing each other and provide the two walls to be connected to each other. When the side wall and the front wall are joined by means of the connection member, the body remains between the fold and the front flange, the retainer gets behind the front flange of the side wall and bears against the sides of the housing from behind.

In an embodiment of the present invention, the latch situated at the lower end of the connection member is placed into the orifice on the fold for mounting the connection member to the fold. A fixer is disposed at the upper end of the connection member providing it to be mounted to the fold. The fixer is placed into an opening arranged on the fold.

The latch has a vertical arm and a horizontal arm, in other words it is configured in an L shape. When the latch is disposed into the orifice, the horizontal arm bears against the rear face of the fold.

The fixer comprises a U shaped leg, extending perpendicularly to the body so as to be placed into the opening, a foot at the free end of the leg, extending vertically to the leg and parallel to the body and at least one detent means disposed on the outer face of the leg, completing the fixing.

In an embodiment of the present invention, two protrusions are positioned on the rear face of the body, not aligned with each other, for mounting the connection member on the fold. The protrusions are seated on the opposite recesses on the fold and thus it is not possible for the connection member to make rotational motion with respect to the plane of the fold.

In an embodiment of the present invention, a hole is situated on each side of the retainer. The retainer gains flexibility by means of the holes, furthermore the connection member is enabled to easily get out of the mould during production.

In an embodiment of the present invention, the front wall is connected to the side wall by three connection members on each side being at the top, middle and bottom. Thus, the side wall and the front wall are provided to be secured to one another without any gap therebetween.

In another embodiment of the present invention, the side wall is connected to the front wall from the middle by a connection member, alignment is facilitated with two alignment members at the top and bottom and the connection is reinforced. The end of the alignment member is in form of isosceles trapezoid and extends from the alignment member towards the front flange. An alignment cavity is situated on the front flange wherein the alignment member is partially seated.

In different embodiments of the present invention, the connection member is used for joining the other walls of the washer/dryer similarly to the connection of the front wall with the side wall as explained above. The side wall with the rear wall, the front wall with the panel wall and the side wall with the panel wall can be secured to each other by means of the connection member.

The model embodiments relating to a washer/dryer realized in order to attain the aim of the present invention are illustrated in the attached figures, where:

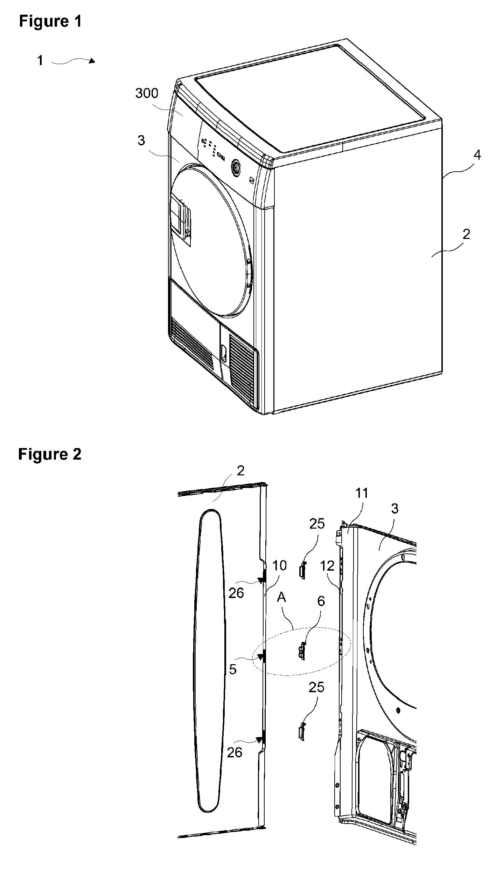

Figure 1 - is the perspective view of a washer/dryer.
Figure 2 - is the exploded view of the front wall, the side wall, the connection member and the alignment members.

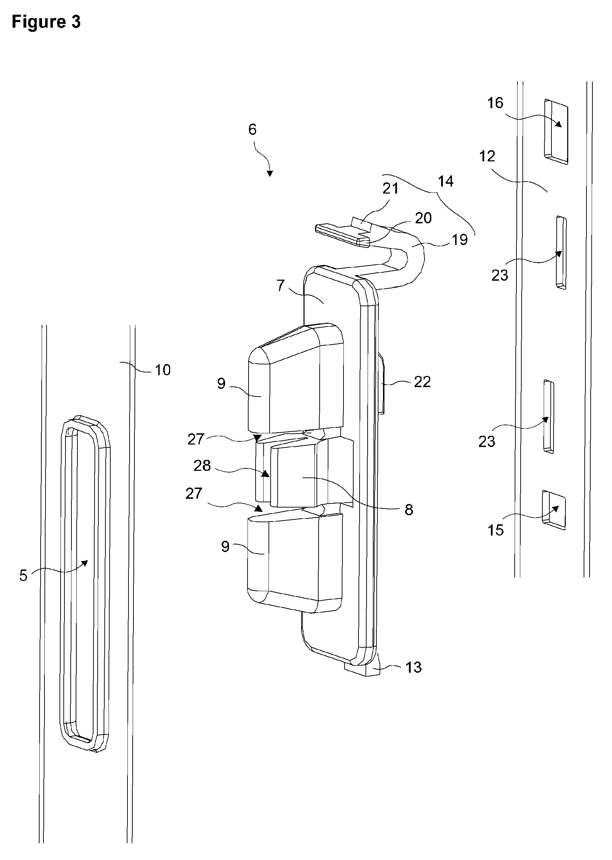

Figure 3 - is the view of detail A in Figure 2.

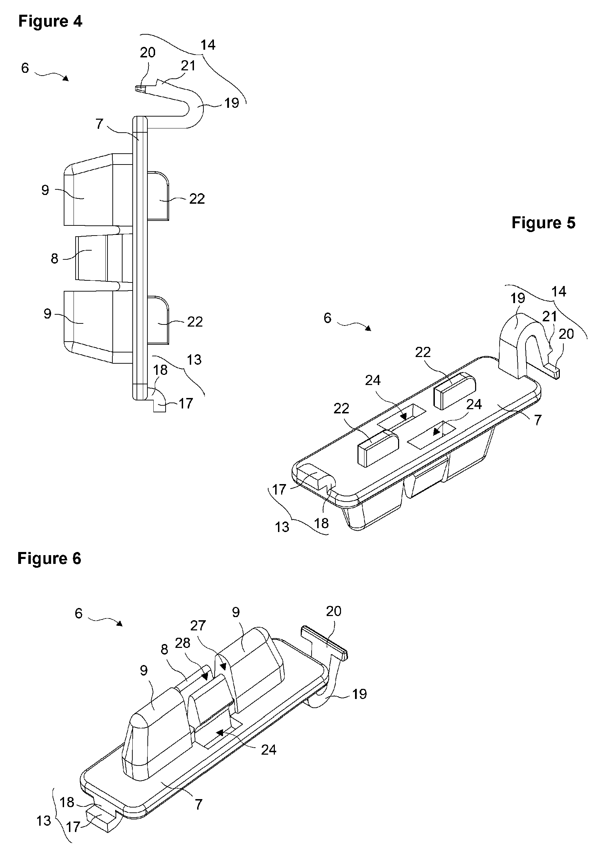

Figure 4 - is the sideways view of the connection member.
Figure 5 - is the bottom perspective view of the connection member.
Figure 6 - is the top perspective view of the connection member.

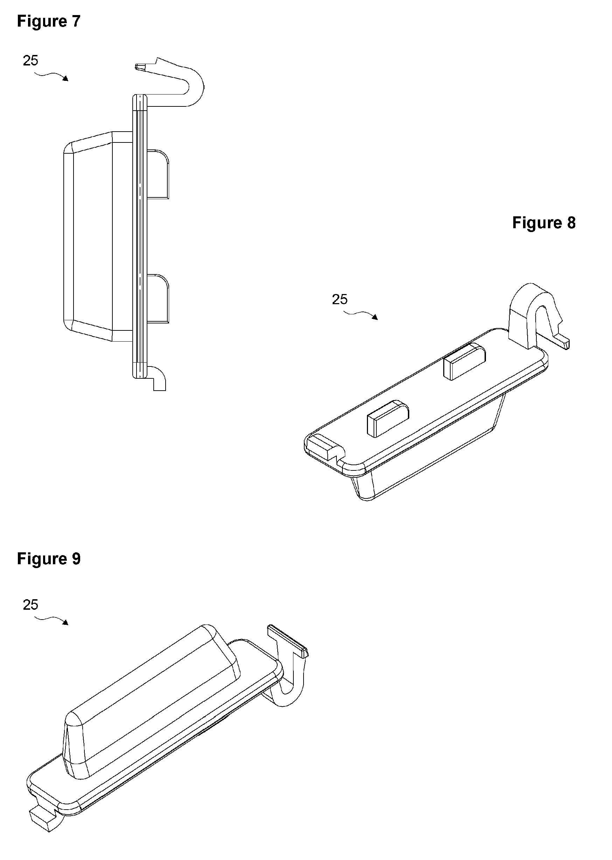

Figure 7 - is the sideways view of the alignment member.
Figure 8 - is the bottom perspective view of the alignment member.
Figure 9 - is the top perspective view of the alignment member.

The elements illustrated in the figures are numbered as follows:
1. Washer/dryer
2. 3. 300. 4. Wall
5. Housing
6. Connection member
7. Body
8. Retainer
9. Extension
10. Front flange
11. Side flange
12. Fold
13. Latch
14. Fixer
15. Orifice
16. Opening
17. Vertical arm
18. Horizontal arm
19. Leg
20. Foot
21. Detent means
22. Protrusion
23. Recess
24. Hole
25. Alignment member
26. Alignment cavity
27. Gap
28. Slot

The washer/dryer (1) comprises walls (2, 3, 300, 4) that enclose the space containing the tub and other elements and a housing (5) on the side of at least one wall (2, 3, 300, 4) where it is connected to the other wall (2, 3, 300, 4) and at least one connection member (6) disposed on the side of the other wall (2, 3, 300, 4) aligned with the housing (5), providing the two walls (2, 3, 300, 4) to be connected to each other perpendicularly from their sides by being seated at least partially in the housing (5).

The connection member (6) used in the washer/dryer (1) of the present invention comprises,
- a plate shaped body (7),
- at least one detent means shaped retainer (8), extending outwards from the body (7), so as to easily enter into the housing (5) but preventing dislodging when pulled back by bearing against the sides of the housing (5) and
- at least one extension (9) disposed near the retainer (8), extending outwards from the body (7), providing the retainer (8) to be guided into the housing (5).

While one wall (2, 3, 300, 4) is joined with the other wall (2, 3, 300, 4) from its sides, one wall (2, 3, 300, 4) is pushed towards the other wall (2, 3, 300, 4) such that the connection member (6) faces the housing (5). The extension (9) directs the connection member (6) and hence the wall (2, 3, 300, 4) whereon the connection member (6) is disposed to the right position such that the retainer (8) is provided to be seated into the housing (5). When alignment is maintained, the extension (9) and the retainer (8) enter into the housing (5) and the retainer (8), after passing to the other side, provides securing by bearing against the sides of the housing (5). The retainer (8) and the extension (9) limit the movement of the walls (2, 3, 300, 4) in each of the three directions.

In an embodiment of the present invention, the connection member (6) comprises an extension (9) on each of the two opposite sides of the retainer (8). Thus, the retainer (8) is protected from the forces acting thereon by the movement of the walls (2, 3, 300, 4), that it connects, with respect to each other in situations like transportation etc. by means of the extensions (9).

In an embodiment of the present invention, the connection member (6) comprises a gap (27) located between the extension (9) and the retainer (8). Thus, the forces that act on the extension (9) are prevented from being transmitted to the retainer (8).

In an embodiment of the present invention, the connection member (6) comprises a slot (28) disposed on the retainer (8), extending in parallel direction to the extension (9), that provides the retainer (8) to stretch while being placed into the housing (5). Thus, the retainer (8) is provided to enter the housing (5) easily.

In an embodiment of the present invention, the extensions (9) are in outwardly narrowing shape so as to provide directing into the housing (5). In other words, the total area of the retainer (8) and the extensions (9) end portions entering into the housing (5) firstly is narrow and this area widens towards the body (7). Thus, when the retainer (8) and the extensions (9) are entirely placed into the housing (5), they are squeezed inside the housing (5) and provide a more firm connection.

In an embodiment of the present invention, the connection member (6) is used in connecting the side wall (2) with the front wall (3).

In an embodiment of the present invention, the side wall (2) comprises a front flange (10) on each of its sides adjacent to the front wall (3), formed by inwardly bending these sides, and the front wall (3) comprises a side flange (11) on each of its lateral sides, formed by bending these sides backwards and a fold (12) on each of the free sides of the side flanges (11) formed by bending these sides to face each other. When the front wall (3) is mounted to the side wall (2), the front flange (10) and the fold (12) overlap one another.

In an embodiment of the present invention, the housing (5) is disposed on the front flange (10) and the connection member (6) on the fold (12). Thus, the side wall (2) and the front wall (3) are provided to be mounted to each other easily and firmly. In this embodiment, the retainer (8) and the extensions (9) are provided to enter into the housing (5) by sliding the front wall (3) towards the side wall (2) such that the front flange (10) and the fold (12) face one another. In the final position, the body (7) remains between the fold (12) and the front flange (10), the retainer (8) and the extensions (9) pass to the other side of the front flange (10).

In an embodiment of the present invention, the connection member (6) comprises a latch (13) and a fixer (14) providing it to be mounted to the fold (12) and the fold (12) comprises an orifice (15) wherein the latch (13) is placed and an opening (16) wherein the fixer (14) is seated. While the connection member (6) is mounted on the fold (12), first the latch (13) is placed into the orifice (15). Thus, the opening (16) is provided to be aligned with the fixer (14). Afterwards, the fixer (14) is seated into the opening (16) and thus the connection member (6) can be detachably mounted to the fold (12).

The latch (13) is disposed on the rear face and lower side of the body (7), and comprises a vertical arm (17) extending outwards from the body (7), with a thickness almost as that of the fold (12) and a horizontal arm (18) extending outwards from the vertical arm (17), parallel to the body (7). When the latch (13) is placed into the orifice (15), the horizontal arm (18) passes through the orifice (15) to the other side of the fold (12) and bears against the fold (12). In this position, the vertical arm (17) is perpendicular to the fold (12) so as to surround the periphery of the orifice (15).

The fixer (14) comprises a U shaped and flexibly structured leg (19), extending by bending outwards from the side of the body (7). While the fixer (14) is placed into the opening (16), the leg (19) stretches as a result of the pressure exerted thereon by the sides of the opening (16) and passes through the opening (16). The leg (19) partially passing through the opening (16) returns almost to its free position and bears against the sides of the opening (16). The fixer (14), furthermore, comprises a foot (20) disposed on the free end of the leg (19), that remains at the front side of the fold (12) together with the body (7) when the leg (19) is placed into the opening (16) and at least one detent means (21) disposed on the outer surface of the leg (19), remaining behind the fold (12) and bearing against the fold (12) when the leg (19) is placed into the opening (16).

In an embodiment of the present invention, the washer/dryer (1) comprises at least two protrusions (22) disposed on the rear surface of the connection member (6), at least partially not situated on the same axis in the horizontal and vertical directions and at least two recesses (23) disposed on the fold (12) wherein the protrusions (22) are seated. By the protrusions (22) being positioned diagonally, the connection member (6) is prevented from making rotational motion on the surface of the fold (12) with the effect of the forces acting thereon and a more rigid connection is provided.

While the connection member (6) is mounted on the fold (12), firstly the horizontal arm (18) of the latch (13) located on the lower end thereof is placed into the orifice (15) situated on the fold (12). First, the protrusions (22) are placed into the recesses (23) then the fixer (14) into the opening (16). When the fixer (14) is completely seated in the opening (16), mounting of the connection member (6) on the fold (12) is completed when the detent means (21) passes to rear side of the fold (12) and becomes free. The mounting personnel notices that the process is completed with the sound made by the detent means (21) when placed into location and the mechanical settlement feeling.

In an embodiment of the present invention, the connection member (6) comprises a hole (24) disposed on each of the two sides of the retainer (8), increasing flexibility of the retainer (8) and providing the connection member (6) to easily get out of the mould during production. Thus, not only the production of the connection member (6) is provided to be easier, but also the endurance during usage is maintained.

In an embodiment of the present invention, the washer/dryer (1) comprises three connection members (6) disposed at the top, middle and bottom on the fold (12), and almost equally spaced apart in the vertical axis. Thus, the side wall (2) and the front wall (3) are provided to be secured to one another without any gap therebetween.

In another embodiment of the present invention, the connection member (6) is disposed on the fold (12) so as to almost correspond to its midpoint in the vertical axis. In this embodiment, the washer/dryer (1), furthermore, comprises two alignment members (25) disposed at the top and bottom points on the fold (12). In this embodiment, the end of the alignment member (25) is in form of an isosceles trapezoid and extends towards the front flange (10). The front flange (10) comprises an alignment cavity (26) wherein the alignment member (25) is partially seated. The alignment member (25) enters the alignment cavity (26) from its narrow end portion and the wider lower end thereof is seated into the alignment cavity (26). By means of the alignment members (25), the connection members (6) are provided to be easily aligned with the housing (5) during assembly.

In different embodiments of the present invention, the connection member (6) is used in connecting the side wall (2) with the rear wall (4), the front wall (3) with the panel wall (300) and the side wall (2) with the panel wall (300).

By means of the connection member (6) used in the washer/dryer (1) of the present invention, a firm connection is maintained by preventing the movement of the connected walls (2, 3, 300, 4) in the three axis with respect to each other. Furthermore, the connection member (6) provides guidance during the assembly of the walls (2, 3, 300, 4) and hence ease of assembly/disassembly.

## Claims

1. A washer/dryer (1) comprising walls (2, 3, 300, 4) that enclose the space containing the tub and other elements from front, sides and behind and a housing (5) disposed on the side of at least one wall (2, 3, 300, 4) where it is connected to the other wall (2, 3, 300, 4) and at least one connection member (6) disposed on the side of the other wall (2, 3, 300, 4) aligned with the housing (5), providing the two walls (2, 3, 300, 4) to be connected perpendicularly from their sides to each other by being seated at least partially in the housing (5),
the connection member (6) having a plate shaped body (7), **characterized by** the connection member (6) further having
- at least one detent means shaped retainer (8), extending outwards from the body (7), so as to easily enter into the housing (5) but preventing dislodging when pulled back by bearing against the sides of the housing (5) such as to be seated snap-fittingly to the sides of the housing (5) and
- at least one extension (9) disposed near the retainer (8), extending outwards from the body (7), providing the retainer (8) to be guided together with the at least one extension (9) into the housing (5).

2. A washer/dryer (1) as in Claim 1, **characterized by** the connection member (6) comprising an extension (9) situated on each of two opposite sides of the retainer (8).

3. A washer/dryer (1) as in Claim 1 or 2, **characterized by** the connection member (6) comprising a gap (27) located between the extension (9) and the retainer (8).

4. A washer/dryer (1) as in any one of the above Claims, **characterized by** the connection member (6) comprising a slot (28) disposed on the retainer (8), extending in parallel direction to the extension (9), that provides the retainer (8) to stretch while being placed into the housing (5).

5. A washer/dryer (1) as in any one of the above Claims, **characterized by** the extensions (9) in outwardly narrowing shape so as to provide directing into the housing (5).

6. A washer/dryer (1) as in any one of the above Claims, **characterized by** the connection member (6) that is used in connecting the side wall (2) and the front wall (3).

7. A washer/dryer (1) as in Claim 6, **characterized by**
- the side wall (2) comprising a front flange (10) on each of its sides adjacent to the front wall (3), formed by inwardly bending these sides,
- the front wall (3) comprising a side flange (11) formed on each of its lateral sides by bending of these sides backwards and a fold (12) on each of the free sides of the side flanges (11) formed by bending of these sides such that they will face each other,
- the housing (5) disposed on the front flange (10) and
- the connection member (6) disposed on the fold (12).

8. A washer/dryer (1) as in Claim 7, **characterized by** the connection member (6) comprising a latch (13) and a fixer (14) providing it to be mounted to the fold (12) and the fold (12) comprising an orifice (15) wherein the latch (13) is placed and an opening (16) wherein the fixer (14) is seated.

9. A washer/dryer (1) as in Claim 8, **characterized by** the latch (13) disposed on the rear face and lower side of the body (7), comprising
- a vertical arm (17) extending outwards from the body (7), with a thickness almost as that of the fold (12), perpendicular to the fold (12) so as to surround the periphery of the orifice (15), when the latch (13) is placed into the orifice (15) and
- a horizontal arm (18) extending outwards from the vertical arm (17), parallel to the body (7), passing through the orifice (15) to the other side of the fold (12) and bearing against the fold (12) when the latch (13) is placed into the orifice (15).

10. A washer/dryer (1) as in Claim 8, **characterized by** the fixer (14) comprising
- a U shaped and flexibly structured leg (19), extending by bending outwards from the side of the body (7),
- a foot (20) disposed on the free end of the leg (19), that remains at the front side of the fold (12) together with the body (7) when the leg (19) is placed into the opening (16) and
- at least one detent means (21) disposed on the outer surface of the leg (19), remaining behind the fold (12) and bearing against the fold (12) when the leg (19) is placed into the opening (16).

11. A washer/dryer (1) as in any one of the above Claims, **characterized by** at least two protrusions (22) disposed on the rear surface of the connection member (6), at least partially not situated on the same axis in the horizontal and vertical directions and at least two recesses (23) disposed on the fold (12) wherein the protrusions (22) are seated.

12. A washer/dryer (1) as in any one of the above Claims, **characterized by** the connection member (6) comprising a hole (24) on each of two sides of the retainer (8), increasing flexibility of the retainer (8) and providing the connection member (6) to easily get out of the mould during production.

13. A washer/dryer (1) as in any one of the above Claims, **characterized by** three connection members (6) disposed at the top, middle and bottom on the fold (12), and almost equally spaced apart in the vertical axis.

14. A washer/dryer (1) as in Claim 1, **characterized by** at least onealignment member (25), being with one end in form of an isosceles trapezoid and extending towards the front flange (10) and the front flange (10) comprising an alignment cavity (26) for each alignment member (25), wherein the alignment member (25) is partially seated.

15. A washer/dryer (1) as in Claim 14, **characterized by** the connection member (6) that is used in connecting the side wall (2) and the front wall (3), wherein the side wall (2) is comprising a front flange (10) and each of its sides adjacent to the front wall (3), formed by inwardly bending these sides,
- the front wall (3) comprising a side flange (11) formed on each of its lateral sides by bending of these sides backwards and a fold (12) on each of the free sides of the side flanges (11) formed by bending of these sides such that they will face each other,
- the housing (5) disposed on the front flange (10) and
- the connection member (6) disposed on the fold (12) so as to almost correspond to its midpoint in the vertical axis and two alignment members (25) disposed at the top and bottom points thereon.

## Patentansprüche

1. Wasch-/Trockenmaschine (1), umfassend Wände (2, 3, 300, 4), die den Raum, der den Waschbehälter und andere Elemente enthält, von vorne, den Seiten und hinten einschließen, und ein Gehäuse (5), das auf der Seite von wenigstens einer Wand (2, 3, 300, 4) angeordnet ist, wo es mit der anderen Wand (2, 3, 300, 4) verbunden ist, und wenigstens ein Verbindungselement (6), das auf der Seite der anderen Wand (2, 3, 300, 4) angeordnet und an dem Gehäuse (5) ausgerichtet ist und es ermöglicht, dass die zwei Wände (2, 3, 300, 4) von ihren Seiten senkrecht miteinander verbunden sind, indem sie wenigstens teilweise in dem Gehäuse (5) sitzen, wobei das Verbindungselement (6) einen plattenförmigen Körper (7) aufweist, **dadurch gekennzeichnet, dass** das Verbindungselement (6) ferner Folgendes aufweist
- wenigstens einen rastmittelförmigen Halter (8), der sich vom Körper (7) nach außen erstreckt, derart, dass er leicht in das Gehäuse (5) gelangen kann, aber ein Lösen verhindert, wenn er zurückgezogen wird, indem er an den Seiten des Gehäuses (5) anliegt, derart, dass er einrastend an den Seiten des Gehäuses (5) sitzt, und
- wenigstens eine Verlängerung (9), die nahe dem Halter (8) angeordnet ist, sich vom Körper (7) nach außen erstreckt und es ermöglicht, dass der Halter (8) zusammen mit der wenigstens einen Verlängerung (9) in das Gehäuse (5) geführt wird.

2. Wasch-/Trockenmaschine (1) nach Anspruch 1, **dadurch gekennzeichnet, dass** das Verbindungselement (6) eine Verlängerung (9) umfasst, die auf jeder von zwei gegenüberliegenden Seiten des Halters (8) angeordnet ist.

3. Wasch-/Trockenmaschine (1) nach Anspruch 1 oder 2, **dadurch gekennzeichnet, dass** das Verbindungselement (6) einen Spalt (27) umfasst, der zwischen der Verlängerung (9) und dem Halter (8) angeordnet ist.

4. Wasch-/Trockenmaschine (1) nach einem der vorangehenden Ansprüche, **dadurch gekennzeichnet, dass** das Verbindungselement (6) einen Schlitz (28) umfasst, der am Halter (8) angeordnet ist, sich parallel zur Verlängerung (9) erstreckt und es ermöglicht, dass sich der Halter (8) dehnt, während er in dem Gehäuse (5) angeordnet wird.

5. Wasch-/Trockenmaschine (1) nach einem der vorangehenden Ansprüche, **dadurch gekennzeichnet, dass** die Verlängerungen (9) eine nach außen schmaler werdende Form aufweisen, um ein Lenken in das Gehäuse (5) hinein zu ermöglichen.

6. Wasch-/Trockenmaschine (1) nach einem der vorangehenden Ansprüche, **dadurch gekennzeichnet, dass** das Verbindungselement (6) zum Verbinden der Seitenwand (2) und der Stirnwand (3) verwendet wird.

7. Wasch-/Trockenmaschine (1) nach Anspruch 6, **dadurch gekennzeichnet, dass**
- die Seitenwand (2) einen Stirnflansch (10) auf jeder ihrer Seiten benachbart zur Stirnwand (3) umfasst, der durch Biegen dieser Seiten nach innen gebildet ist,
- die Stirnwand (3) einen Seitenflansch (11), der an jeder ihrer lateralen Seiten durch Biegen dieser Seiten nach hinten gebildet ist, und eine Faltung (12) auf jeder der freien Seiten der Seitenflansche (11) umfasst, die durch Biegen dieser Seiten gebildet ist, derart, dass sie einander zugewandt sind,
- das Gehäuse (5) an der Stirnflansch (10) angeordnet ist und
- das Verbindungselement (6) an der Faltung (12) angeordnet ist.

8. Wasch-/Trockenmaschine (1) nach Anspruch 7, **dadurch gekennzeichnet, dass** das Verbindungselement (6) einen Riegel (13) und ein Fixierelement (14) umfasst, das es ermöglicht, dass es an der Faltung (12) angebracht ist, und die Faltung (12) eine Mündung (15), in der der Riegel (13) angeordnet ist, und eine Öffnung (16) umfasst, in der das Fixierelement (14) sitzt.

9. Wasch-/Trockenmaschine (1) nach Anspruch 8, **dadurch gekennzeichnet, dass** der Riegel (13) auf der Rückseite und Unterseite des Körpers (7) angeordnet ist, umfassend
- einen vertikalen Arm (17), der sich vom Körper (7) nach außen erstreckt, mit einer Dicke, die nahezu derjenigen der Faltung (12) entspricht, senkrecht zur Faltung (12), derart, dass er den Umfang der Mündung (15) umgibt, wenn der Riegel (13) in der Mündung (15) angeordnet ist, und
- einen horizontalen Arm (18), der sich parallel zum Körper (7) von dem vertikalen Arm (17) nach außen erstreckt, und durch die Mündung (15) auf die andere Seite der Faltung (12) verläuft und an der Faltung (12) anliegt, wenn der Riegel (13) in der Mündung (15) angeordnet ist.

10. Wasch-/Trockenmaschine (1) nach Anspruch 8, **dadurch gekennzeichnet, dass** das Fixierelement (14) Folgendes umfasst
- einen U-förmigen und flexibel strukturierten Schenkel (19), der sich durch Biegen von der Seite des Körpers (7) nach außen erstreckt,
- einen Fuß (20), der am freien Ende des Schenkels (19) angeordnet ist und zusammen mit dem Körper (7) auf der Stirnseite der Faltung (12) bleibt, wenn der Schenkel (19) in der Öffnung (16) angeordnet ist, und
- wenigstens ein Rastmittel (21), das an der Außenfläche des Schenkels (19) angeordnet ist und hinter der Faltung (12) bleibt und an der Faltung (12) anliegt, wenn der Schenkel (19) in der Öffnung (16) angeordnet ist.

11. Wasch-/Trockenmaschine (1) nach einem der vorangehenden Ansprüche, **dadurch gekennzeichnet, dass** wenigstens zwei Vorsprünge (22) auf der Rückseite des Verbindungselements (6) angeordnet sind und wenigstens teilweise in horizontaler und vertikaler Richtung nicht auf derselben Achse liegen, und wenigstens zwei Vertiefungen (23) an der Faltung (12) angeordnet sind, in denen die Vorsprünge (22) sitzen.

12. Wasch-/Trockenmaschine (1) nach einem der vorangehenden Ansprüche, **dadurch gekennzeichnet, dass** das Verbindungselement (6) ein Loch (24) auf jeder der zwei Seiten des Halters (8) umfasst, das die Flexibilität des Halters (8) erhöht und es ermöglicht, dass das Verbindungselement (6) während der Herstellung leicht aus der Form entnehmbar ist.

13. Wasch-/Trockenmaschine (1) nach einem der vorangehenden Ansprüche, **dadurch gekennzeichnet, dass** drei Verbindungselements (6) an der Oberseite, in der Mitte und an der Unterseite der Faltung (12) angeordnet und an der vertikalen Achse nahezu gleichmäßig beabstandet sind.

14. Wasch-/Trockenmaschine (1) nach Anspruch 1, **gekennzeichnet durch** wenigstens ein Ausrichtungselement (25), das mit einem Ende die Form eines gleichschenkligen Trapezes aufweist und sich zum Stirnflansch (10) hin erstreckt, und **dadurch**, dass der Stirnflansch (10) einen Ausrichtungshohlraum (26) für jedes Ausrichtungselement (25) umfasst, in dem das Ausrichtungselement (25) teilweise sitzt.

15. Wasch-/Trockenmaschine (1) nach Anspruch 14, **dadurch gekennzeichnet, dass** das Verbindungselement (6) zum Verbinden der Seitenwand (2) und der Stirnwand (3) verwendet wird, wobei die Seitenwand (2) einen Stirnflansch (10) an jeder ihrer Seiten benachbart zur Stirnwand (3) umfasst, die durch Biegen dieser Seiten nach innen gebildet ist,
- die Stirnwand (3) einen Seitenflansch (11), der an jeder ihrer lateralen Seiten durch Biegen dieser Seiten nach hinten gebildet ist, und eine Faltung (12) auf jeder der freien Seiten der Seitenflansche (11) umfasst, die durch Biegen dieser Seiten gebildet ist, derart, dass sie einander zugewandt sind,
- das Gehäuse (5) an dem Stirnflansch (10) angeordnet ist und
- das Verbindungselement (6) an der Faltung (12) angeordnet ist, derart, dass es nahezu mit deren Mittelpunkt an der vertikalen Achse übereinstimmt, und zwei Ausrichtungselemente (25) an einem oberen und unteren Punkt davon angeordnet sind.

## Revendications

1. Un lave-linge/sèche-linge (1) comprenant des parois (2, 3, 300, 4) qui délimitent l'espace contenant la cuve et les autres éléments à partir de l'avant, des côtés et de l'arrière et un logement (5) qui est disposé sur le côté d'au moins une paroi (2, 3, 300, 4) où il est relié à l'autre paroi (2, 3, 300, 4) et au moins un élément de raccordement (6) qui est disposé sur le côté de l'autre paroi (2, 3, 300, 4) alignée avec le logement (5), permettant aux deux parois (2, 3, 300, 4) d'être reliées perpendiculairement l'une à l'autre à partir de leurs côtés en étant placé au moins partiellement dans le logement (5),
l'élément de raccordement (6) présentant un corps en forme de plaque (7), **caractérisé par** l'élément de raccordement (6) présentant en outre
- au moins un élément de retenue (8) qui s'étend vers l'extérieur à partir du corps (7) de manière à pénétrer facilement dans le logement (5) mais empêchant le délogement lorsqu'il est tiré vers l'arrière en s'appuyant sur les côtés du logement (5) de manière à être placé sur les côtés du logement (5) par l'encliquetage et
- au moins une extension (9) qui est disposée à proximité de l'élément de retenue (8), qui s'étend vers l'extérieur à partir du corps (7) et qui permet à l'élément de retenue (8) d'être guidé avec l'au moins une extension (9) dans le logement (5).

2. Un lave-linge/sèche-linge (1) selon la Revendication 1, **caractérisé par** l'élément de raccordement (6) comprenant une extension (9) arrangée sur chacun des deux côtés opposés de l'élément de retenue (8).

3. Un lave-linge/sèche-linge (1) selon la Revendication 1 ou 2, **caractérisé par** l'élément de raccordement (6) comprenant un vide (27) situé entre l'extension (9) et l'élément de retenue (8).

4. Un lave-linge/sèche-linge (1) selon l'une quelconque des revendications précédentes, **caractérisé par** l'élément de raccordement (6) comprenant une fente (28) qui est située sur l'élément de retenue (8), qui s'étend parallèlement à l'extension (9) et qui permet à l'élément de retenue (8) de s'étirer tout en étant placé dans le logement (5).

5. Un lave-linge/sèche-linge (1) selon l'une quelconque des revendications précédentes, **caractérisé par** les extensions (9) dans une forme se rétrécissant vers l'extérieur de manière à permettre l'orientation dans le logement (5).

6. Un lave-linge/sèche-linge (1) selon l'une quelconque des revendications précédentes, **caractérisée par** l'élément de raccordement (6) qui est utilisé pour raccorder la paroi latérale (2) et la paroi avant (3).

7. Un lave-linge/sèche/linge (1) selon la Revendication 6, **caractérisé par**
- la paroi latérale (2) comprenant une bride avant (10) sur chacun de ses côtés adjacents à la paroi avant (3) et qui est formée en pliant ces côtés vers l'intérieur,
- la paroi avant (3) comprenant une bride latérale (11) qui est formée sur chacun de ses côtés latéraux en pliant ces côtés vers l'arrière et un pli (12) sur chacun des côtés libres des brides latérales (11) qui est formé en pliant ces côtés de manière à faire face l'un à l'autre,
- le logement (5) qui est disposé sur la bride avant (10) et
- l'élément de raccordement (6) qui est disposé sur le pli (12).

8. Un lave-linge/sèche-linge (1) selon la Revendication 7, **caractérisé par** l'élément de raccordement (6) comprenant un verrou (13) et un élément de fixation (14) qui lui permettent d'être monté au pli (12) et le pli (12) comprenant un orifice (15) où le verrou (13) est placé et une ouverture (16) où l'élément de fixation (14) est placé.

9. Un lave-linge/sèche-linge (1) selon la Revendication 8, **caractérisé par** le verrou (13) qui est disposé sur la surface arrière et le côté inférieur du corps (7), comprenant
- un bras vertical (17) qui s'étend vers l'extérieur à partir du corps (7), qui présente une épaisseur à peu près égale à celle du pli (12) et qui est perpendiculaire au pli (12) de manière à entourer la périphérie de l'orifice (15) lorsque le verrou (13) est placé dans l'orifice (15) et
- un bras horizontal (18) qui s'étend vers l'extérieur à partir du bras vertical (17), qui est parallèle au corps (7), qui passe à travers l'orifice (15) vers l'autre côté du pli (12) et qui s'appuie sur le pli (12) lorsque le verrou (13) est placé dans l'orifice (15).

10. Un lave-linge/sèche-linge (1) selon la revendication 8, **caractérisé par** l'élément de fixation (14) comprenant
- une flexible jambe en U (19) qui s'étend en se pliant vers l'extérieur à partir du côté du corps (7),
- un pied (20) qui est disposé sur l'extrémité libre de la jambe (19) et qui reste au côté avant du pli (12) avec le corps (7) lorsque la jambe (19) est placée dans l'ouverture (16) et
- au moins une détente (21) qui est disposée sur la surface extérieure de la jambe (19), qui reste derrière le pli (12) et qui s'appuie sur le pli (12) lorsque la jambe (19) est placée dans l'ouverture (16).

11. Un lave-linge/sèche-linge (1) selon l'une quelconque des revendications précédentes, **caractérisé par** au moins deux protubérances (22) qui sont disposées sur la surface arrière de l'élément de raccordement (6), qui ne sont pas situées au moins partiellement dans le même axe dans les directions horizontale et verticale, et au moins deux évidements (23) qui sont disposés sur le pli (12), dans lesquels les protubérances (22) sont placées.

12. Un lave-linge/sèche-linge (1) selon l'une quelconque des revendications précédentes, **caractérisé par** l'élément de raccordement (6) comprenant un trou (24) sur chacun des deux côtés de l'élément de retenue (8), qui augmente la flexibilité de l'élément de retenue (8) et qui permet à l'élément de raccordement (6) d'être sorti du moule facilement pendant la fabrication.

13. Un lave-linge/sèche-linge (1) selon l'une quelconque des revendications précédentes, **caractérisée par** trois éléments de raccordement (6) qui sont disposés dans la partie supérieure, intermédiaire et inférieure sur le pli (12) et espacés équidistantement dans l'axe vertical.

14. Un lave-linge/sèche-linge (1) selon la Revendication 1, **caractérisé par** au moins un élément d'alignement (25) avec une extrémité en forme d'un trapèze isocèle et s'étendant vers la bride avant (10) et la bride avant (10) comprenant une cavité d'alignement (26) pour chaque élément d'alignement (25), dans laquelle l'élément d'alignement (25) est placé partiellement.

15. Un lave-linge/sèche-linge (1) selon la Revendication 14, **caractérisée par** l'élément de raccordement (6) qui est utilisé pour raccorder la paroi latérale (2) et la paroi avant (3), où la paroi latérale (2) comprend une bride avant (10) sur chacun de ces côtés adjacents à la paroi avant (3) et qui est formée en pliant ces côtés vers l'intérieur,
- la paroi avant (3) comprenant une bride latérale (11) qui est formée sur chacun de ses côtés latéraux en pliant ces côtés vers l'arrière et un pli (12) sur chacun des côtés libres des brides latérales (11) qui est formé en pliant ces côtés de manière à faire face l'un à l'autre,
- le logement (5) qui est disposé sur la bride avant (10) et
- l'élément de raccordement (6) qui est disposé sur le pli (12) de manière à correspondre à peu près à son point médian dans l'axe vertical et deux éléments d'alignement (25) qui sont disposés sur les points supérieur et inférieur sur celui-ci.
